Europäisches Patentamt

European Patent Office  (11) Publication number: **0 094 648**

Office européen des brevets  **A1**

# EUROPEAN PATENT APPLICATION

(21) Application number: **83104753.5**

(22) Date of filing: **13.05.83**

(51) Int. Cl.³: **E 03 B 9/08**
**E 02 D 29/12, E 03 F 5/02**
**B 29 D 3/02**

(30) Priority: **13.05.82 NL 8201994**

(43) Date of publication of application:
**23.11.83 Bulletin 83/47**

(84) Designated Contracting States:
**BE DE GB NL**

(71) Applicant: IJzergieterij Lovink B.V.
No. 3, Lovinkweg
NL-7061 DT Terborg(NL)

(72) Inventor: Slooter, Arie Cornelis
Stationsweg 5
NL-7061 CT Terborg(NL)

(72) Inventor: Van den Hout, Jan Simon
Eksterhof 3
NL-7051 WP Varsseveld(NL)

(74) Representative: Hoijtink, Reinoud et al,
OCTROOIBUREAU ARNOLD & SIEDSMA Isartorplatz 5
D-8000 München 2(DE)

(54) **Method for producing a pot for an underground valve.**

㉟7 Pot for an underground trap is manufactured by charging a mould with a mixture of curable synthetic resin and reinforcing fibres, the mould being subsequently closed and heated. The mixture employed is previously homogenized.

FIG. 2

EP 0 094 648 A1

"Method of manufacturing a pot for an underground trap, pot obtained by such a method and mixture for carrying out said method."

-1-

The invention relates to a method of manufacturing a pot for an underground trap, in which a dosed amount of mixture of curable synthetic resin and reinforcing fibres, as the case may be, subsequent to preheating, is charged in an open mould having an internal shape in the closed state which corresponds with the shape of the pot to be manufactured, the mould is closed whilst the temperature is raised and the mould is subsequently opened for taking out the hardened pot. Such a method is known. In this prior art method a glass fibre mat impregnated with polyester is placed in the opened mould. By exerting pressure on the material, whilst heating, to form the casting, a strong migration of the synthetic resin occurs so that particularly in the outermost spaces of the closed mould substantially only synthetic resin is found, whereas at other places an unproportionally large amound of glass fibre is concentrated in the form of a wad.

Such a poorly homogeneous distribution does not ensure the correct mechanical properties and gives rise to specimen spread.

The invention is based on the recognition of the fact that pots of the present type have to meet exclusively the requirement of pressure resistance rather than that of tensile strength.Therefore, the invention proposes to previously homogenize the mixture. From experiments it has meanwhile been found that with this novel method the formed pot has excellent homogenetiy so that at those places where in the prior art often only synthetic resin is found even the tensile strength is improved in accordance with the invention.

In order to ensure a very satisfactory smoothness without the risk of impressions of varying wall thicknesses and to avoid cracking of the pot due to thermal stress during manufacture, the invention furthermore proposes to add an agent furthering the heat conduction to the mixture. Preferably, this agent is previously added to the mixture in the form of a powder.

The drawing shows a known pot for an underground trap manufactured in accordance with the method embodying the invention. The drawing shows in

Figure 1 a perspective view of the lid of a pot for an underground trap and

Figure 2 a fragmentary, perspective view of the pot of Figure 1.

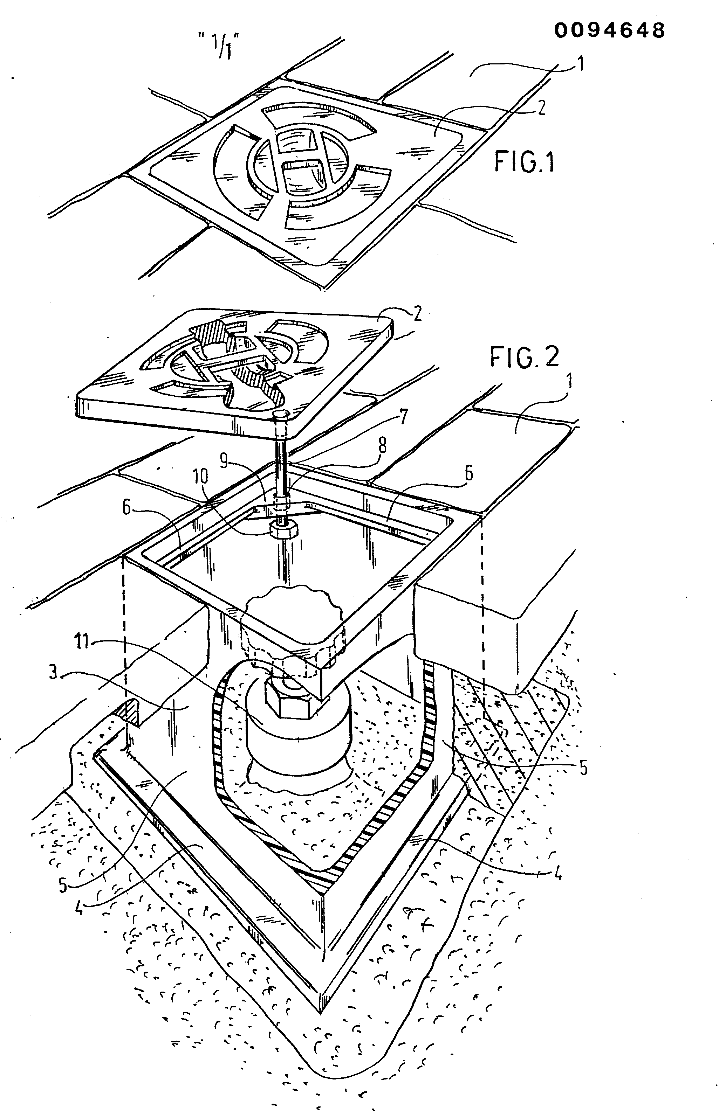

Fig.1 shows a paved surface 1 having a lid 2 forming part of an underground pot for a fire cock to be described hereinafter. The top surface of the lid 2 is substantially flush with the top surface of the pavement 1.

Fig.2 shows an underground pot 3 comprising four walls 5 supported by an equal number of flanges 4 and being provided near the top rim on the inner surface with flange rims 6. The latter serve to support the lid 2 described briefly with reference to Fig.1. The lid 2 is made from cast iron and is fixedly coupled by means of a bolt 7 with the pot 3, since the bolt 7 is passed through a hole 8 in a widened flange part 9 of the flanges 6, whilst the head 10 of the bolt 7 is located below the widened flange part 9 and has a width such that it cannot pass through the hole 8. The end of the bolt 7 remote from the head 10 is rigidly secured to the lid 2 by means not shown during the manufacturing process.

The pot 3 of reinforced synthetic resin is arranged so that it protects an underground fire cock 11. It should be noted that the invention is not limited to a pot of the kind shown in Fig.2. For example, the pot may have a section differing from the square shape and, if desired, the flanges 6 may be replaced by a rim below which the wall thickness is enlarged and above which the wall thickness is relatively reduced so that the lid 2 can bear on a rim located at a distance from the top edge of the pot approximately equal to the thickness of the lid.

-----

-1-

CLAIMS

1. A method of manufacturing a pot for an underground closing member in which a dosed amount of mixture of curable synthetic resin and reinforcing fibre, as the case may be, subsequent to preliminary heating, is charged in an open mould having an internal shape corresponding with the shape of the pot to be manufactured, the mould is closed whilst the temperature is raised and the mould is subsequently opened for taking out the cured pot characterized in that the mixture is previously homogenized.

2. A method as claimed in claim 1 characterized in that an agent furthering heat conduction is added to the mixture.

3. A method as claimed in claim 2 characterized in that the agent furthering the heat conduction is formed by a powder.

4. A homogeneous mixture of curable synthetic resin and reinforcing fibres for the manufacture of a pot for an underground closing member for use in a method as claimed in anyone of the preceding claims.

5. A pot for an underground closing member manufactured by carrying out the method claimed in anyone of claims 1 to 3.

----

"1/1"

0094648

FIG.1

FIG.2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | NL-A-6 716 219 (BOLIDT MAATSCHAPPIJ TOT EXPLOITATIE VAN KUNSTSTOFFEN EN BOUWWERKEN) <br> * Page 2, lines 11-16; page 4, lines 6,12-20; claim 1; figures 1,2 * | 1,4,5 | E 03 B 9/08 <br> E 02 D 29/12 <br> E 03 F 5/02 <br> B 29 D 3/02 |
| Y | NL-A-6 403 713 (SOCIETE ORGANICO) <br> * Page 2, lines 22-32; page 3, lines 17-19; page 4, line 31 - page 5, line 1; claims 1,2,10 * | 1,2,4, 5 | |
| Y | US-A-3 861 995 (KELLOGG) <br> * Column 1, line 9; column 3, lines 64,65; figure 2 * | 1 | |
| Y | NL-A-6 413 437 (AKTIEBOLAGET MALMÖ FLYGINDUSTRI) <br> * Page 6, lines 21,22; claim 1; figure 1 * | 1 | **TECHNICAL FIELDS SEARCHED (Int. Cl. 3)** <br><br> E 03 B <br> E 02 D <br> E 03 F <br> B 29 D <br> E 04 G |
| Y | US-A-3 182 110 (BALCOM) <br> * Column 1, lines 49,69,70; column 2, lines 62-64; figure 1 * | 1 | |
| Y | FR-A-2 241 407 (BASLER STÜCK FÄRBEREI) <br> * Page 5, lines 19-24; claim 1 * | 1 | |

--- -/-

The present search report has been drawn up for all claims

| Place of search | Date of completion of the search | Examiner |
|---|---|---|
| THE HAGUE | 03-08-1983 | AST W.O. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | EP-A-0 048 523  (DE LANGE)<br>* Page 5,  line  4; claims 1,4; figures 1,2 * | 1 | |
| Y | US-A-3 974 599  (GROSH)<br>* Column  1, lines 13-17; column 4,  line 47; claim 1; figures 1,3 * | 1 | |
| Y | NL-A-6 711 299  (STENBERG-FLYGT)<br>* Page 5, line 26; claim 1; figures 3-5 * | 1 | |
| A | FR-A-2 303 122  (LEVAILLANT)<br>* Page 2, lines 23-26; claim 1 * | 2,3 | |
| A | NL-A-6 911 945  (GLANZSTOFF)<br>* Page 1,  lines  7-14; page 5, line 35 * | 1 | TECHNICAL FIELDS SEARCHED (Int. Cl. ³) |
| A | GB-A-1 052 773  (BRIGHT)<br>* Page 2, lines 102,103; claim 1; figures 2-5 * | 1 | |
| A | US-A-3 712 776  (WOODHAM)<br>* Column  1,  lines 19,20,59,60; column 2, lines 11-14 * | 1 | |
| | ---     -/- | | |

The present search report has been drawn up for all claims

| Place of search | Date of completion of the search | Examiner |
|---|---|---|
| THE HAGUE | 03-08-1983 | AST W.O. |

## European Patent Office

### EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | NL-A-6 406 710 (THE DOW CHEMICAL CO.) <br> * Page 5, line 20; claim 1; figures 5,6 * | 1 | |

-----

| | | | TECHNICAL FIELDS SEARCHED (Int. Cl. ³) |
|---|---|---|---|

The present search report has been drawn up for all claims

| Place of search | Date of completion of the search | Examiner |
|---|---|---|
| THE HAGUE | 03-08-1983 | AST W.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

      .......................................................................

& : member of the same patent family, corresponding document

EPO Form 1503. 03.82